# EUROPÄISCHE PATENTSCHRIFT

(11) **EP 0 585 835 B1**
(45) Veröffentlichungstag und Bekanntmachung des Hinweises auf die Patenterteilung: **16.04.1997**
(21) Anmeldenummer: 93113733.5
(22) Anmeldetag: 27.08.1993
(51) Int. Cl.: C08G 18/79, C08G 18/28, C08G 18/80, C08G 18/02, C07D 251/34

(54) **Verfahren zur Herstellung von niedrigviskosen Isocyanurat- und Urethangruppen enthaltenden Polyisocyanatmischungen**
Process for the preparation of low-viscosity polyisocyanate compositions having isocyanurate and urethane groups
Procédé de préparation de compositions de polyisocyanate à faible viscosité contenant des groupes isocyanurate et uréthane

(30) Priorität: 02.09.1992 DE 4229183
(43) Veröffentlichungstag der Anmeldung: 09.03.1994
(73) Patentinhaber: BASF Aktiengesellschaft, 67063 Ludwigshafen (DE)
(72) Erfinder: Wolff, Stefan, Dr., D-6703 Limburgerhof (DE); Renz, Hans, Dr., D-6701 Meckenheim (DE); Mohrhardt, Guenter, D-6720 Speyer (DE)

(56) Entgegenhaltungen:
- EP-A- 0 056 581
- EP-A- 0 089 297
- EP-A- 0 173 252

## Beschreibung

Gegenstand der Erfindung ist ein Verfahren zur Herstellung von Isocyanurat- und Urethangruppen sowie gegebenenfalls Uretdion- und Allophanatgruppen enthaltenden Polyisocyanatmischungen mit einer niedrigen Viskosität durch partielle Cyclisierung von vorzugsweise aliphatischen, cycloaliphatischen oder araliphatischen Diisocyanaten in Gegenwart von Trimerisierungskatalysatoren, Desaktivierung dieser Katalysatoren, Umsetzung der partiell trimerisierten Isocyanuratgruppen und gegebenenfalls Uretdiongruppen enthaltenden Polyisocyanatmischungen mit 0,5 bis 10 Mol-% mindestens eines aliphatischen oder cycloaliphatischen Alkohols oder mindestens eines Polyoxyalkylenalkohols oder einer Mischung aus mindestens zwei dieser Alkohole und Abtrennung der monomeren Diisocyanate.

Zur Herstellung von hochwertigen Ein- oder Zweikomponenten Polyurethan(PU)-klebstoffen und hochwertigen, licht- und wetterbeständigen Ein- oder Zweikomponenten PU-Lacken werden als Polyisocyanatkomponente insbesondere Isocyanuratgruppen enthaltende Polyisocyanatmischungen verwendet.

Diese Produkte werden durch Cyclisierung von vorzugsweise aliphatischen und/oder cycloaliphatischen Diisocyanaten, wie z.B. 1,6-Hexamethylendiisocyanat (HDI) oder 1-Isocyanato-3,5,5-trimethyl-3-isocyanatomethylcyclohexan(IPDI), in Gegenwart von Trimerisierungskatalysatoren erhalten.

Als geeignete Trimerisierungskatalysatoren seien beispielhaft genannt: tertiäre Amine, Phosphine, Alkoholate, Metalloxide, Hydroxide, Carboxylate und metallorganische Verbindungen. Als Trimerisierungskatalysatoren vorzüglich bewährt haben sich z.B. Tris-(N,N-dialkylaminoalkyl)-s-hexahydrotriazine und organische Salze von schwachen Säuren mit Tetraalkylammoniumgruppen oder Hydroxyalkylammoniumgruppen, beispielsweise Tris-(N,N-dimethylaminopropyl)-s-hexahydrotriazin, Trimethyl-N-2-hydroxypropylammonium-2-ethylhexanoat und N,N-Dimethyl-N-hydroxyethyl-N-2-hydroxypropylammoniumhexanoat.

Zur Herstellung der Isocyanuratgruppen enthaltenden Polyisocyanate läßt man die organischen Diisocyanate in Gegenwart des Trimerisierungskatalysators sowie gegebenenfalls unter Mitverwendung von Lösungsmitteln und/oder Hilfsstoffen, zweckmäßigerweise bei erhöhten Temperaturen bis zum Erreichen des gewünschten NCO-Gehalts cyclisieren. Danach wird die Reaktion durch Desaktivierung des Katalysators abgebrochen und das überschüssige monomere Diisocyanat, vorzugsweise durch Destillation mit Hilfe eines Dünnschichtverdampfers, abgetrennt. Je nach Art und Menge des verwendeten Katalysators und den angewandten Reaktionsbedingungen erhält man Isocyanuratgruppen enthaltende Polyisocyanatmischungen, die gegebenenfalls unterschiedliche Anteile an Uretdiongruppen oder oligomeren Isocyanuraten aufweisen können.

Die auf diese Weise hergestellten Isocyanuratgruppen enthaltenden Polyisocyanatmischungen können nach bekannten Methoden mit Polyhydroxylverbindungen, z.B. mit Polyhydroxyacrylaten, zu 1- oder 2-Komponenten-PU-Lacken umgesetzt werden. Die Aushärtung dieser Lacke erfolgt durch Trocknen an Luft und kann thermisch und/oder katalytisch beschleunigt werden.

Obgleich die Isocyanuratgruppen enthaltenden Polyisocyanatmischungen im Vergleich zu mit Biuretgruppen modifizierten Polyisocyanatmischungen eine verbesserte Lagerstabilität und erhöhte Wetterbeständigkeit besitzen, weisen die Produkte auch Nachteile auf. Nachteilig ist beispielsweise ihre hohe Viskosität, so daß sie nur gelöst in polaren, vielfach gesundheitsgefährdenden Lösungsmitteln, wie z.B. Ethylacetat, Toluol oder Xylol, verarbeitet werden können. Nachteilig ist ferner ihre unzulängliche Verträglichkeit mit fluorhaltigen Harzen, wie sie üblicherweise zur Wetterfestausrüstung Anwendung finden.

Zur Beseitigung des letztgenannten Nachteils werden die Isocyanuratgruppen enthaltenden Polyisocyanatmischungen nach Angaben der US-A 4 789 705 mit Alkan- oder Cycloalkandiolen mit 10 bis 40 Kohlenstoffatomen und gemäß US-A 5 086 175 mit Monoalkoholen mit 10 bis 50 Kohlenstoffatomen, eingesetzt in Mengen von 0,1 bis 30 Gew.-% bzw. 1 bis 40 Gew.-%, bezogen auf die Diisocyanatmenge nach folgenden zwei Verfahren modifiziert: Das Diisocyanat wird mit dem Monoalkohol oder Diol in Gegenwart des Trimerisierungskatalysators umgesetzt und danach das nicht umgesetzte, monomere Diisocyanat aus der Reaktionsmischung abgetrennt oder das Diisocyanat wird in Gegenwart des Trimerisierungskatalysators partiell cyclisiert. Aus der erhaltenen Reaktionsmischung werden die nicht umgesetzten, monomeren Diisocyanate abgetrennt und die Isocyanuratgruppen enthaltende Polyisocyanatmischung mit den Monoalkoholen oder Diolen zur Reaktion gebracht.

Bekannt sind ferner Verfahren zur Herstellung von Isocyanuratgruppen enthaltenden Polyisocyanatmischungen, bei denen die Trimerisierungskatalysatoren in Kombination mit einem Beschleuniger, z.B. einer phenolischen oder alkoholischen Hydroxylverbindung oder einem tertiären Amin eingesetzt werden. Nach Angaben der DE-A-32 19 608 (US-A 4 604 418) wird zur Trimerisierung von HDI neben dem Natrium- oder Kaliumsalz einer organischen Carbonsäure mit 3 bis 11 Kohlenstoffatomen als Trimerisierungskatalysator ein Beschleuniger in einer Menge von 0,01 bis 0,2 Gew.-%, bezogen auf die eingesetzte HDI-Menge, verwendet. Als geeignete Beschleuniger werden beispielhaft genannt: phenolische Hydroxylverbindungen, wie z.B. Phenol, Cresol und Trimethylphenol und alkoholische Hydroxylverbindungen, wie z.B. Ethanol, Cyclohexanol und Ethylenglykol sowie tertiäre Amine, wie Triethylamin, Methylpyridin und Benzyldimethylamin.

Die EP-A 0 155 559 beschreibt die Verwendung von Trialkyl-N-2-hydroxypropylammonium-benzoatderivaten als Trimerisierungskatalysatoren zur Herstellung von Isocyanuratgruppen enthaltenden Polyisocyanaten. Auch diese Katalysatoren können in Verbindung mit ein- oder mehrwertigen Alkoholen in Mengen bis maximal 6 Mol-% oder Phenolen in Mengen bis maximal 5 Mol-% als Beschleumiger eingesetzt werden. Nachteilig an diesen Verfahren, bei denen die Trimerisierung der Diisocyanate in Gegenwart der alkoholischen oder phenolischen Hydroxylverbindungen durchgeführt wird, ist, daß die aus Diisocyanat und Hydroxylverbindung gebildeten Urethane in verstärktem Maße zu Allophanaten weiterreagieren und dadurch die Lagerstabilität der Isocyanat-, Urethan- und Allophanatgruppen enthaltenden Polyisocyanatmischungen in erheblichem Maß beeinträchtigen werden können. Aufgrund der Tendenz der Allophanate zur Rückspaltung in die eingesetzten Diisocyanate bei der Lagerung, ist ihre Verwendbarkeit z.B. als Lackrohstoff nur beschränkt möglich.

Isocyanurat-polyisocyanate mit einem hohen Anteil an Isocyanuratgruppen und einer extrem niedrigen Viskosität sind Gegenstand der DE-A-38 10 908 (US-A 4 801 663). Die beschriebenen Isocyanuratpolyisocyanate enthalten, bezogen auf das Gesamtgewicht, mindestens 60 Gew.-% N,N',N"-Tris-(6-isocyanatohexyl)-isocyanurat, bis zu 10 Gew.-% N,N'-Bis-(6-isocyanatohexyl)-uretdion und bis zu 40 Gew.-% Poly-(6-isocyanatohexyl)-isocyanurat.

Bedingt durch den Trend nach lösungsmittelfreien oder zumindest lösungsmittelarmen Lacksystemen, besteht auch bei den hoch beanspruchbaren, licht- und wetterfesten PU-Lacken das Erfordernis festkörperreiche PU-Lacksysteme, sogenannte High-Solid-Systeme zu entwickeln, die sich gegenüber den konventionellen Lacksystemen durch eine niedrigere Viskosität, das heißt eine gleich gute Verarbeitbarkeit bei einem reduzierten Lösungsmittelgehalt, auszeichnen sollten. Nachteilig an festkörperreichen PU-Lackrohstoffen ist insbesondere ihre unzureichende Handhabbarkeit, z.B. beim Betanken von Containern, die auf ihrer hohen Viskosität bei Raum- und tieferen Temperaturen beruht. Zur Beseitung dieser Schwierigkeit werden die Lackrohstoffe mit einem Lösungsmittel verdünnt.

Niedrigviskose Isocyanurat-polyisocyanate sind bisher hauptsächlich nach den vorgenannten Standardverfahren mit einem reduzierten Umsatz, herstellbar. Diese Verfahren sind jedoch unwirtschaftlich, da ein großer Anteil an nicht umgesetzten Diisocyanaten abdestilliert und zurückgeführt werden muß, das heißt, die Wertprodukte nur mit einer niedrigen Raum-Zeit-Ausbeute erzielt werden. Nachteilig ist ferner, daß die erreichbare Grenzviskosität, die bei Standardsystemen im Bereich von 2000 bis 4000 mPas bei 25°C liegt, nur etwa um den Faktor 2 gesenkt werden kann. Lediglich durch die Mitverwendung eines inerten Lösungsmittels zur Durchführung der Trimerisierungsreaktion kann nach Angaben der DE-A-38 10 908 (US-A 4 801 663) die Viskosität der Isocyanurat-polyisocyanate auf der Grundlage von HDI reduziert werden, wobei jedoch die Abtrennung des Lösungsmittels einen zusätzlichen unerwünschten, kostspieligen Verfahrensschritt bildet.

Die Aufgabe der vorliegenden Erfindung bestand darin, niedrigviskose, lagerstabile Isocyanurat- und Urethangruppen enthaltende Polyisocyanatmischungen herzustellen, die insbesondere zur Formulierung von Lösungsmittel reduzierten 2-Komponenten-PU-Lacken verwendbar sind. Da die Allophanate, wie bereits ausgeführt wurde, bei der Lagerung in Ausgangsisocyanate zurückgespalten werden, sollte ihre Bildung bei der Reaktion mit Alkoholen möglichst vollständig vermieden oder zumindest wesentlich reduziert werden.

Diese Aufgabe konnte überraschenderweise gelöst werden durch eine spezielle Reaktionsführung bei der Modifizierung der organischen Diisocyanate.

Gegenstand der Erfindung ist somit ein Verfahren zur Herstellung von Isocyanurat- und Urethangruppen enthaltenden Polyisocyanatmischungen durch partielle Cyclisierung von organischen Diisocyanaten in Gegenwart von Trimerisierungskatalysatoren, Desaktivierung der Trimerisierungskatalysatoren nach beendeter Cyclisierung und anschließender Umsetzung der erhaltenen Isocyanuratgruppen enthaltenden Polyisocyanatmischungen mit Hydroxylverbindungen, das dadurch gekennzeichnet ist, daß man die partiell trimerisierten Isocyanuratgruppen enthaltenden Polyisocyanatmischungen mit 0,5 bis 10 Mol-% mindestens einer Hydroxylverbindung aus der Gruppe der aliphatischen Alkohole, cycloaliphatischen Alkohole und Polyoxyalkylenalkohole oder Mischungen aus mindestens zwei der genannten Alkohole umsetzt und danach die monomeren Diisocyanate abtrennt.

Nach dem erfindungsgemäßen Verfahren werden niedrigviskose Isocyanurat- und Urethangruppen enthaltende Polyisocyanatmischungen erhalten, die überraschenderweise keine oder nur geringe Mengen an Allophanatgruppen aufweisen, da die gebildeten Urethane im wesentlichen vollständig erhalten bleiben. Werden hingegen die organischen Diisocyanate zunächst mit den Hydroxylverbindungen zur Reaktion gebracht (Preurethanisierung) oder die Hydroxylverbindungen werden als Lösungsmittel für die eingesetzten Trimerisierungskatalysatoren verwendet und den organischen Diisocyanaten kontinuierlich zur Cyclisierung einverleibt, so erhält man zwar ebenfalls niedrigviskose Isocyanuratgruppen enthaltende Polyisocyanatmischungen, die jedoch einen aus den vorhandenen Urethanen gebildeten hohen Anteil an Allophanaten besitzen, der sich bei einer längeren Lagerung der Endprodukte ungünstig auf den Gehalt an freien monomeren Diisocyanaten auswirken kann. Werden hingegen die Isocyanuratgruppen enthaltenden Polyisocyanate nach Abtrennung der monomeren Diisocyanate mit Hydroxylverbindungen partiell modifiziert, so tritt durch die Urethanbildung keine Viskositätserniedrigung ein. Obgleich durch die Bildung von Allophanaten nach dem Verfahren der Preurethanisierung und von Urethanen nach dem erfindungsgemäßen Verfahren die Möglichkeit zur Bildung von Wasserstoffbrücken besteht und dadurch eine Viskositätserhöhung der Polyisocyanatmischung zu erwarten ist, trat diese nicht ein. Vielmehr werden nach beiden Verfahren niedrigviskose Isocyanuratgruppen enthaltende Polyisocyanatmischungen erhalten, wobei jedoch im Gegensatz zu den erfindungsgemäßen Urethangruppen und Isocyanuratgruppen enthaltenden Polyisocyanatmischungen solche mit einem erheblichen Allophanatgehalt wegen ihrer eingeschränkten Lagerstabilität als Lackrohstoff eher ungeeignet sind.

Zur Herstellung der niedrigviskosen Isocyanurat- und Urethangruppen enthaltenden Polyisocyanatmischungen nach dem erfindungsgemäßen Verfahren und den hierfür verwendbaren Ausgangsstoffen und Trimerisierungskatalysatoren sowie deren Desaktivierungsmittel ist im einzelnen folgendes auszuführen:

Als organische Diisocyanate finden vorzugsweise die lichtbeständigen araliphatischen und insbesondere aliphatischen und cycloaliphatischen Diisocyanate Verwendung. Im einzelnen seien beispielhaft genannt: araliphatische Diisocyanate, wie z.B. Xylylen-, Tetramethyl-xylylen-diisocyanat und 4,4'-Bis(isocyanatomethyl)-diphenylmethan, aliphatische Diisocyanate, zweckmäßigerweise solche mit 4 bis 12 Kohlenstoffatomen, vorzugsweise 6 bis 10 Kohlenstoffatomen, beispielsweise 1,4-Butan-, 2,2,4- oder 2,4,4-Trimethyl-hexan-diisocyanat-1,6, 1,10-Decan-, 1,12-Dodecan- und insbesondere 1,6-Hexamethylen-diisocyanat, und cycloaliphatische Diisocyanate mit 6 bis 15 Kohlenstoffatomen, vorzugsweise 6 bis 13 Kohlenstoffatomen, beispielsweise 1,3- oder 1,4-Cyclohexan-diisocyanat, 1,3- oder 1,4-Bis(isocyanatomethyl)-cyclohexan, 2,2'-, 2,4'- und 4,4'-Dicyclohexylmethan-diisocyanat und insbesondere 1-Isocyanato-3,5,5-trimethyl-3-isocyanatomethyl-cyclohexan (IPDI). Die araliphatischen, aliphatischen und cycloaliphatischen Diisocyanate können sowohl einzeln als auch in Form von Mischungen der gleichen Gruppe oder von verschiedenen Gruppen verwendet werden. Im Gemisch mit den vorgenannten Diisocyanaten oder auch einzeln können ferner aromatische Diisocyanate, wie z.B. 4,4'-, 2,4'- und/oder 2,2'-Diphenylmethan-diisocyanat und 2,4- und 2,6-Toluylen-diisocyanat mit der Hilfe des erfindungsgemäßen Verfahrens in die Isocyanurat- und Urethangruppen enthaltenden Polyisocyanatmischungen übergeführt werden.

Geeignete Hydroxylverbindungen besitzen vorteilhafterweise 1 bis 30 Kohlenstoffatome, vorzugsweise 1 bis 9 Kohlenstoffatome und werden vorteilhafterweise ausgewählt aus der Gruppe der linearen und verzweigten aliphatischen Alkohole, der cycloaliphatischen und alkylsubstituierten cycloaliphatischen Alkohole. Verwendbar sind auch Mischungen dieser Alkohole. Beispielhaft genannt seien lineare und verzweigte Alkanole mit 1 bis 9 Kohlenstoffatomen und cycloaliphatische Alkohole mit 6 bis 9 Kohlenstoffatomen wie z.B. Methanol, Ethanol, n- und iso-Propanol, n-Butanol, sek.-Butanol, n-Pentanol, n-Hexanol, Octanol, Nonanol, 2-Ethyl-butanol, 2, 2-Dimethyl-hexanol, 2-Ethylhexanol, Cyclohexanol, Methyl-cylohexanol und Ethyl-cyclohexanol. Vorzüglich bewährt haben sich und daher vorzugsweise verwendet werden verzweigte Alkohole mit 3 bis 9 Kohlenstoffatomen und aus dieser Gruppe insbesondere 2-Ethylhexanol.

Als Hydroxylverbindung verwendet werden können ferner Polyoxyalkylenalkohole mit einem Molekulargewicht bis 2000, vorzugsweise bis 1000, vorzugsweise solche aus der Gruppe der Polyoxyethylen-, Polyoxypropylen- und Polyoxypropylen-polyoxyethylenalkohole. Geeignete Polyoxyalkylenalkohole dieser Art, die die Oxyalkylengruppen blockweise oder in statistischer Verteilung gebunden haben können, können z.B. in an sich bekannter Weise hergestellt werden durch Polyaddition von Ethylenoxid, 1,2-Propylenoxid oder Mischungen aus Ethylenoxid und 1,2-Propylenoxid an ein monofunktionelles Startermolekül, z.B. ein lineares oder verzweigtes Alkanol mit 1 bis 20 Kohlenstoffatomen.

Die zur Urethanbildung geeigneten Hydroxylverbindungen werden in einer Menge von 0,5 bis 10 Mol-%, vorzugsweise 1 bis 6 Mol-% und insbesondere 2 bis 5 Mol-%, bezogen auf die eingesetzten Molmengen an organischen Diisocyanaten verwendet, wobei mit einem zunehmenden Verzweigungsgrad bei gleicher Molmasse der Alkohole eine untereinander abnehmende Unverträglichkeit der Reaktionsprodukte erzielt werden kann. Alkohole mit mehr als 30 Kohlenstoffatomen oder Polyoxyalkylenalkohole mit Molekulargewichten größer als 2000 bewirken eine unerwünscht deutliche Erniedrigung des NCO-Gehalts der erfindungsgemäßen Polyisocyanatmischung.

Zur partiellen Cyclisierung der organischen Diisocyanate können die vorgenannten, bekannten und üblicherweise verwendeten Trimerisierungskatalysatoren verwendet werden. Aufgrund ihrer einfachen Herstellungs- und Reinigungsweise werden als Trimerisierungskatalysatoren vorzugsweise Trialkyl-hydroxylalkylammoniumsalze, z.B. N,N,N-Trimethyl-N-2-hydroxypropylammonium-p-tert.-butylbenzoat und insbesondere N,N,N-Trimethyl-N-2-hydroxypropylammonium-2-ethylhexanoat eingesetzt. Die Trimerisierungskatalysatoren, die auch die Bildung von Uretdiongruppen und oligomeren Isocyanuratgruppen als Nebenprodukte bewirken können, werden üblicherweise in einer Menge von 0,001 bis 0,5 Gew.-%, vorzugsweise von 0,01 bis 0,05 Gew.-%, bezogen auf das Gewicht der organischen Diisocyanate verwendet.

Nach Bildung der gewünschten Menge an Isocyanuratgruppen, die analytisch durch eine laufende Bestimmung des NCO-Gehalt des Reaktionsmischung ermittelt werden kann, werden die Trimerisierungskatalysatoren üblicherweise desaktiviert. Als Desaktivatoren eignen sich beispielsweise anorganische oder organische Säuren, die entsprechenden Säurehalogenide und Alkylierungsmittel. Beispielhaft genannt seien Phosphorsäure, Monochloressigsäure, Dodecylbenzolsulfonsäure, Benzoylchlorid, Dimethylsulfat und vorzugsweise Dibutylphosphat. Die Desaktivierungsmittel können in Mengen von 1 bis 200 Mol-%, vorzugsweise 20 bis 100 Mol-%, bezogen auf die Mole an Trimerisierungskatalysator eingesetzt werden.

Obgleich die Isocyanurat- und Urethangruppen enthaltenden Polyisocyanate auch unter Mitverwendung von inerten Lösungs- oder Verdünnungsmitteln hergestellt werden könnten, finden diese beim erfindungsgemäßen Verfahren aus ökologischen und ökonomischen Gründen vorzugsweise keine Verwendung.

Zur Herstellung der Isocyanurat- und Urethangruppen enthaltenden Polyisocyanatmischungen nach dem erfindungsgemäßen Verfahren werden die organischen Diisocyanate, vorteilhafterweise unter einer Atmosphäre aus unter den Reaktionsbedinungen inerten Gasen, wie z.B. Stickstoff, in Gegenwart der Trimerisierungskatalysatoren bei Temperaturen von 30 bis 110°C, vorzugsweise von 60 bis 100°C partiell cyclisiert. Nach Erreichen des gewünschten Isocyanuratgehalts bzw. NCO-Gehalts, der vorteilhafterweise in einem NCO-Bereich von 35 bis 48 Gew.-%, vorzugsweise von 40 bis 45 Gew.-%, bezogen auf das Gewicht der Isocyanuratgruppen enthaltenden Reaktionsmischung, liegt und in Abhängigkeit von der Reaktionstemperatur üblicherweise in einem Zeitraum von 0,1 bis 5 Stunden, erhalten wird, wird der Trimerisierungskatalysator durch Zugabe eines Desaktivators desaktiviert und dadurch die Isocyanuratbildung beendet. Zu der erhaltenen Isocyanuratgruppen enthaltenden Polyisocyanatmischung fügt man nun bei einer Temperatur im Bereich von 30 bis 100°C, vorzugsweise 60 bis 90°C, kontinuierlich oder stufenweise, mindestens eine Hydroxylverbindung und läßt die Reaktionsmischung bei einer Temperatur im vorgenannten Bereich in 0,25 bis 6 Stunden, vorzugsweise 0,5 bis 2 Stunden ausreagieren. Danach werden die überschüssigen monomeren organischen Diisocyanate, zweckmäßigerweise mit Hilfe eines Dünnschichtverdampfers unter vermindertem Druck, abgetrennt.

Die nach dem erfindungsgemäßen Verfahren hergestellten im wesentlichen Diisocyanat-freien Isocyanurat- und Urethangruppen enthaltenden Polyisocyanatmischungen, die NCO-Gehalte von 10 bis 23 Gew.-%, vorzugsweise von 15 bis 22 Gew.-%, einen Allophanatgehalt von kleiner als 1 Flächenprozent, gemessen nach der Gelpermeationschromatographie (GPC), vorzugsweise kleiner als 0,5 Flächenprozent und einen Restgehalt an monomeren organischen Diisocyanaten von weniger als 0,5 Gew.-%, vorzugsweise weniger als 0,2 Gew.-%, wobei die Gew.-% jeweils bezogen sind auf das Gewicht der Polyisocyanatmischung, besitzen, und gegebenenfalls geringe Anteile an Uretdion- und oligomeren Isocyanuratgruppen aufweisen, sind helle bis schwachgelbliche gefärbte, vorzugsweise klare Flüssigkeiten mit einer sehr guten Lagerstabilität und einer Viskosität bei 25°C von kleiner als 1500 mPas, vorzugsweise von 300 bis 1000 mPas.

Die niedrigviskosen Isocyanurat- und Urethangruppen enthaltenden Polyisocyanatmischungen, sind auch ohne die Verdünnung mit einem Lösungsmittel bei tieferen Temperaturen, z.B. von 0 bis 25°C, gut handhabbar, insbesondere gut fließfähig und damit sehr gut in Container und Tankzüge abfüllbar. Die Produkte eignen sich insbesondere zur Formulierung von hochwertigen, wetterbeständigen und lösungsmittelreduzierten 2-Komponenten-PU-Lacken und PU-High-Solid-Lacken. Sie können ferner verwendet werden als Ersatz für herkömmliche Polyisocyanate in üblichen Polyurethan-Formulierungen, z.B. in Systemen für Klebstoffe oder Beschichtungen sowie zur Herstellung von PU-Dispersionen.

### Beispiele 1 bis 10

### Herstellung der Isocyanurat- und Urethangruppen enthaltenden Polyisocyanatmischungen

### Allgemeine Herstellungsvorschrift

500 g (2,97 Mol) Hexamethylen-diisocyanat-1,6 (HDI) wurden unter Rühren unter einer Stickstoffatomsphäre auf 80°C erwärmt, 400 ppm N,N,N-Trimethyl-N-(2-hydroxy-propyl)ammonium-2-ethylhexanoat als Trimerisierungskatalysator hinzugefügt und die Reaktionsmischung bei dieser Temperatur bis zu einem NCO-Gehalt von 42 bis 45 Gew.-%, entsprechend einem HDI-Umsatz von ungefähr 20 bis 35 Gew.-%, cyclisiert. Durch Zugabe von 1 cm³ einer 10 gew.-%igen Lösung von Dibutylphosphat in HDI wurde der Trimerisierungskatalysator desaktiviert, danach der Isocyanuratgruppen enthaltenden Polyisocyanatmischung die Hydroxylverbindung einverleibt und unter Rühren bei 80°C in einem Zeitraum von 2 Stunden die Urethanbildung durchgeführt. Zur Abtrennung des monomeren HDI bis auf einen Restgehalt von kleiner als 0,2 Gew.-% wurde die Reaktionsmischung über einen Dünnschichtverdampfer unter vermindertem Druck destilliert.

Man erhielt helle bis schwachgelbliche gefärbte, klare, flüssige Isocyanurat- und Urethangruppen enthaltende Polyisocyanatmischungen mit einem Allophanatgehalt von kleiner als 1 Flächenprozent, gemessen nach der Gelpermeationschromatographie (GPC) durch die Auswertung der Flächen der Peaks.

Die zur Urethanbildung verwendeten Hydroxylverbindungen und -mengen, der NCO-Gehalt der Isocyanuratgruppen enthaltenden Polyisocyanatmischung und der Isocyanurat- und Urethangruppen enthaltenden, im wesentlichen HDI-freien Polyisocyanatmischung sowie ihre Viskosität, gemessen bei 25°C sind in Tabelle I zusammengefaßt.

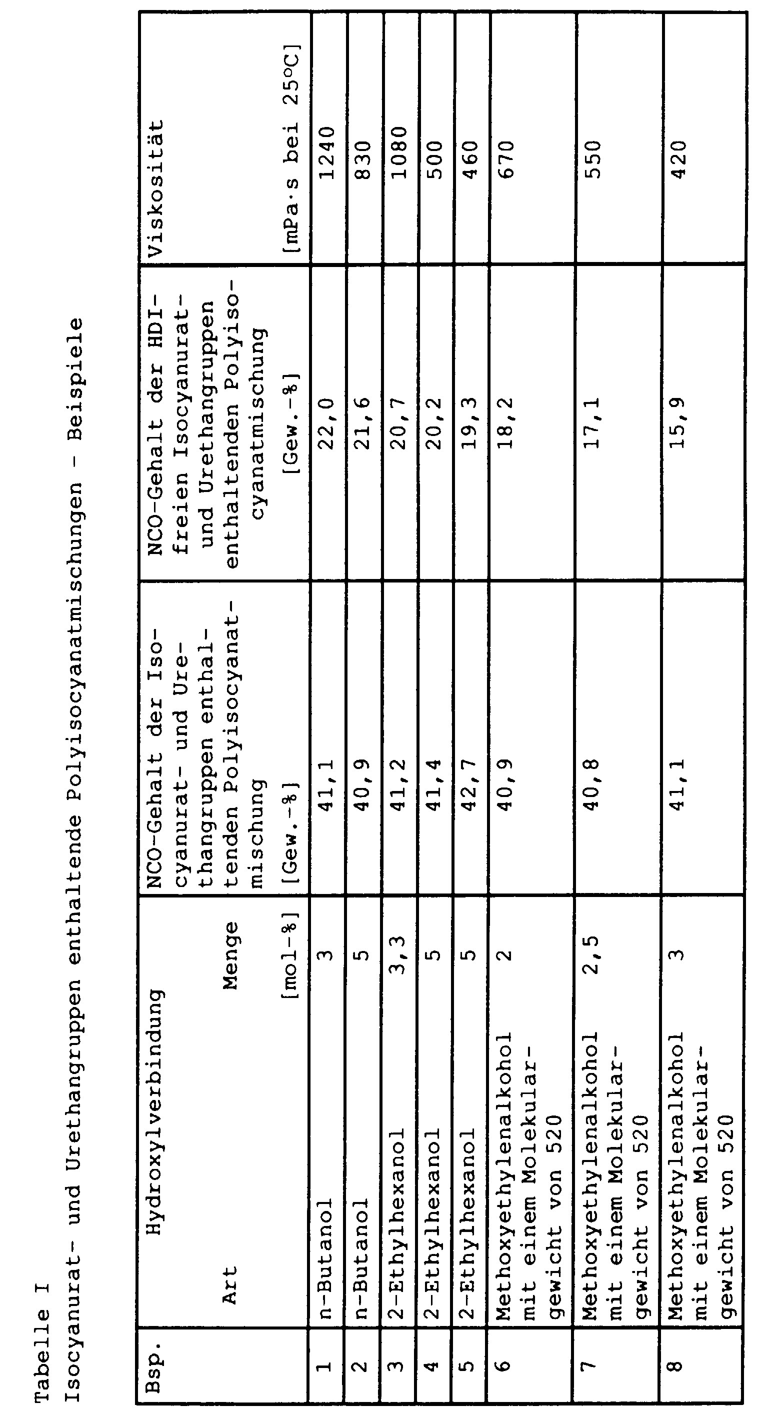

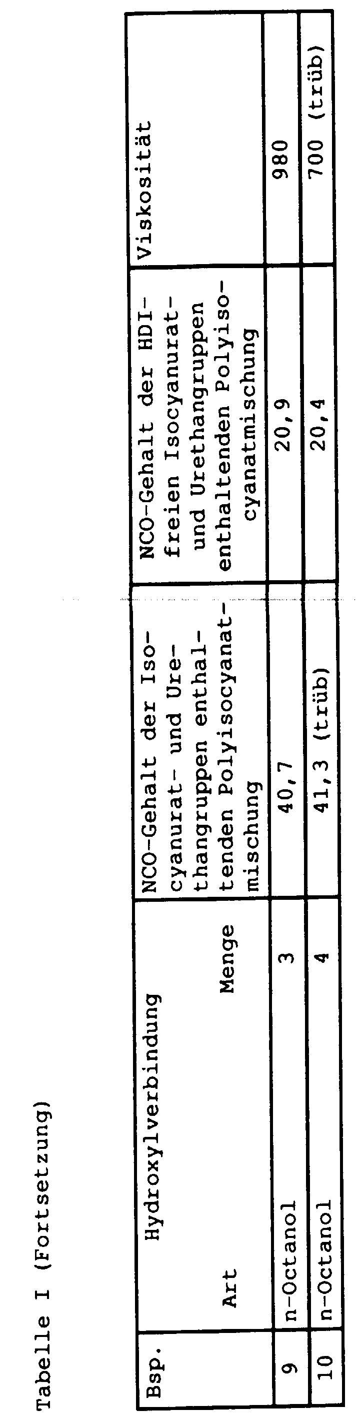

### Vergleichsbeispiele I bis XIV

### Herstellung der Urethan- und Isocyanuratgruppen enthaltenden Polyisocyanatmischungen

### Allgemeine Herstellungsvorschrift:

500 g (2,97 Mol) HDI wurden unter Rühren unter einer Stickstoffatmosphäre auf 80°C erwärmt, 400 ppm N,N,N-Trimethyl-N-(2-hydroxypropyl)-ammonium-2-ethylhexanoat, gelöst in der in Tabelle II genannten Art und Menge der Hydroxylverbindung, hinzugefügt und die Reaktionsmischung bei dieser Temperatur bis zu einem NCO-Gehalt von 40 bis 42 Gew.-%, entsprechend einem HDI-Umsatz von ungefähr 30 Gew.-% urethanisiert und gleichzeitig cyclisiert.

Die Reaktionszeit hierfür betrug ungefähr 0,5 bis 4 Stunden. Durch Zugabe von 1 cm³ einer 10 gew.-%igen Lösung von Dibutylphosphat in HDI wurde der Trimerisierungskatalysator desaktiviert und die Polyisocyanatmischung zur Abtrennung des monomeren HDI bis auf einen Restgehalt von kleiner als 0,2 Gew.-% über einen Dünnschichtverdampfer unter vermindertem Druck destilliert.

Man erhielt helle bis schwachgelbliche gefärbte, vorzugsweise klare Urethan- und Isocyanuratgruppen enthaltende Polyisocyanatmischungen mit einem Allophanatgehalt von 1 bis 15 Flächenprozenten (GPC).

Die zur Urethanbildung verwendeten Hydroxylverbindungen und -mengen, der NCO-Gehalt der Urethan- und Isocyanuratgruppen enthaltenden Polyisocyanatmischungen sowie der NCO-Gehalt des nach Abtrennung des monomeren HDI erhaltenen Endprodukts und dessen Viskosität sind in Tabelle II zusammengefaßt.

Die Bestimmung des Gehalts an Allophanat- und Urethangruppen wurde, wie bereits ausgeführt wurde, mit Hilfe der Gelpermeationschromatographie durchgeführt. Das Gelpermeationschromatogramm (Figur) zeigt die ermittelten unterschiedlichen Urethan- und Allophanatgehalte nach Beispiel 2 und Vergleichsbeispiel I mit n-Butanol als Hydroxylverbindung. Die nach 2 hergestellte Polyisocyanatmischung zeigt einen deutlichen Urethan- und praktisch keinen Allophanatpeak, während das Produkt nach Vergleichsbeispiel I einen deutlichen Allophanat- und praktisch keinen Urethanpeak aufweist.

### Vergleichsbeispiel XV

### Herstellung einer Isocyanuratgruppen enthaltenden Polyisocyanatmischung

Man verfuhr analog den Angaben der Beispiele I bis XIV, führte jedoch die Cyclisierungsreaktion in Abwesenheit einer Hydroxylverbindung durch. Der NCO-Gehalt der HDI-haltigen und HDI-freien Isocyanuratgruppen enthaltenden Polyisocyanatmischung und ihre Viskosität wird in Tabelle II genannt.

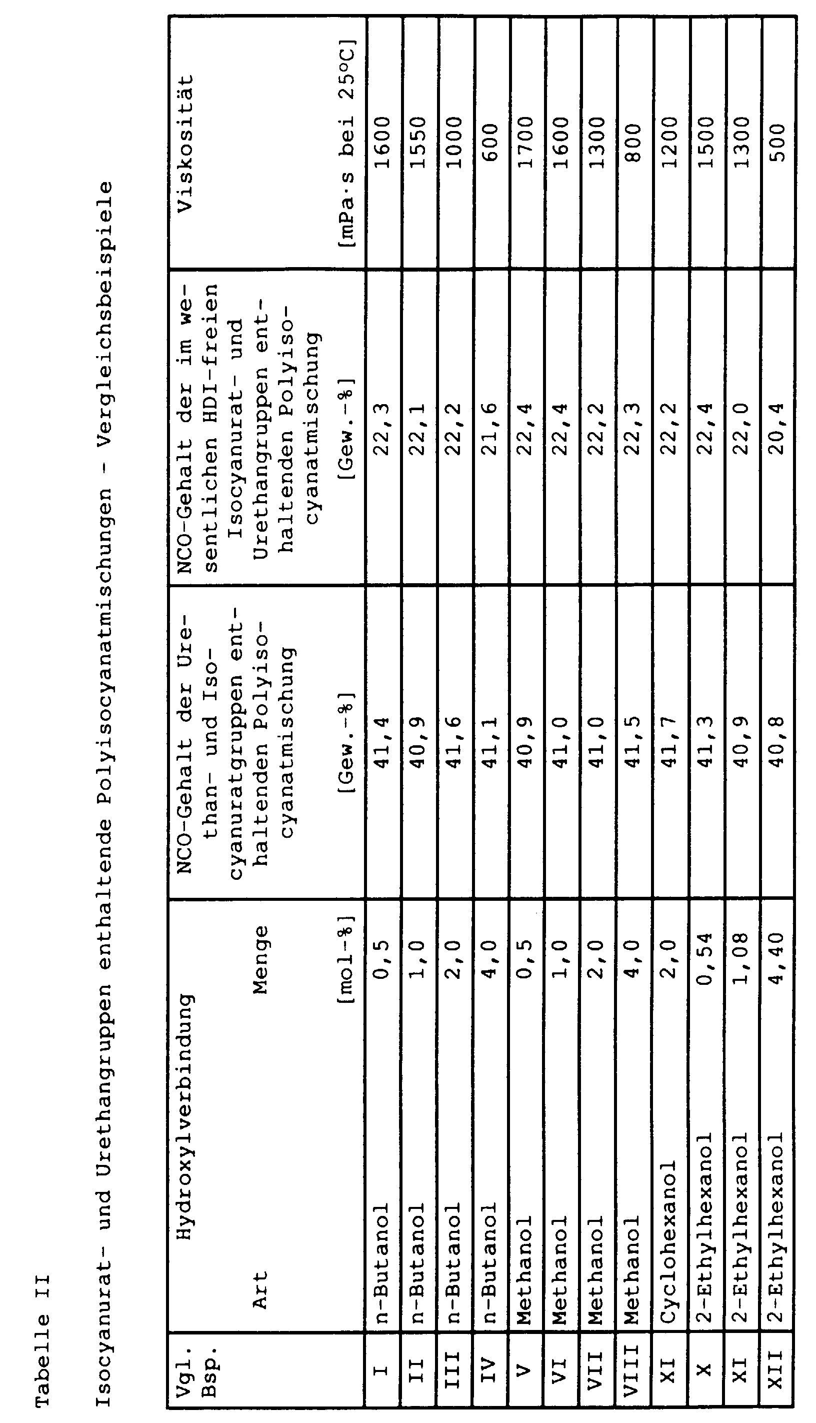

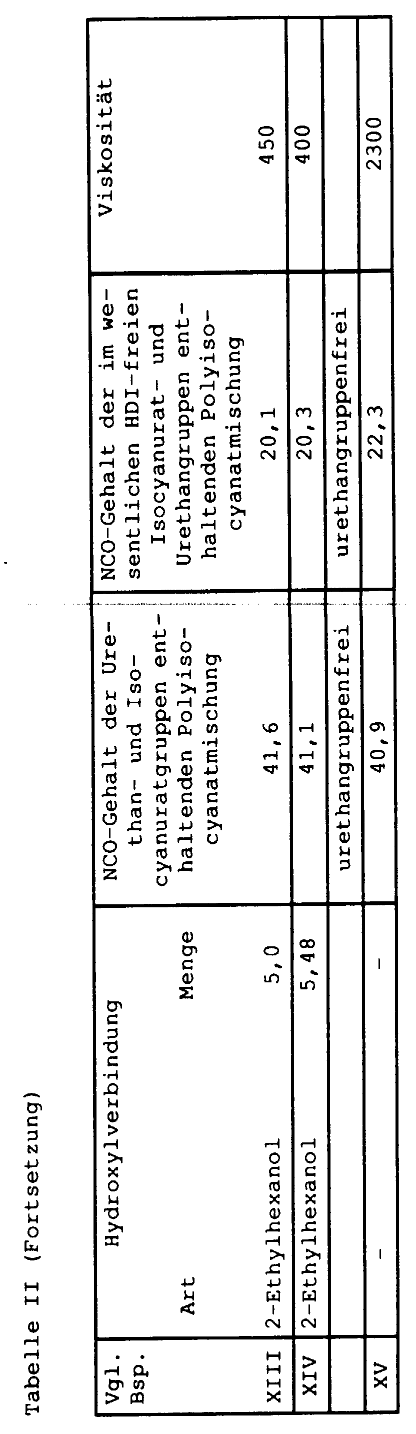

### Vergleichsbeispiele XVI bis XXVIII

### Herstellung der Urethan- und Isocyanuratgruppen enthaltenden Polyisocyanatmischungen

### Allgemeine Herstellungsvorschrift

500 g (2,97 Mol) HDI wurden analog den Angaben der Vergleichsbeispiele I bis XIV in Gegenwart der Menge A der Hydroxylverbindung urethanisiert und gleichzeitig cyclisiert. Nach Erreichen des gewünschten NCO-Gehalts von 40 bis 42 Gew.-%, entsprechend einem HDI-Umsatz von ungefähr 30 Gew.-%, wurde der Trimerisierungskatalysator durch Zugabe von 1 cm³ einer 10 gew.-%igen Lösung von Dibutylphosphat in HDI desaktiviert, der Reaktionsmischung die Menge B der Hydroxylverbindung hinzugefügt und die Urethanbildung bei 80°C in einer Stunde zu Ende geführt. Zur Abtrennung des monomeren HDI bis auf einen Restgehalt von kleiner als 0,2 Gew.-% wurde die Polyisocyanatmischung über einen Dünnschichtverdampfer unter vermindertem Druck destilliert.

Man erhielt helle bis schwachgelblich gefärbte, klare Urethan- und Isocyanuratgruppen enthaltende Polyisocyanatmischungen mit einem Allophanatgehalt von 1 bis 3 Flächenprozenten (GPC).

Die zur Urethanbildung verwendeten Hydroxylverbindungen und ihre Mengen A und B, der NCO-Gehalt der Urethan- und Isocyanuratgruppen enthaltenden Polyisocyanatmischung nach Zugabe der Mengen A und B der Hydroxylverbindung und der NCO-Gehalt des im wesentlichen HDI freien Endprodukts und dessen Viskosität sind in Tabelle III zusammengefaßt.

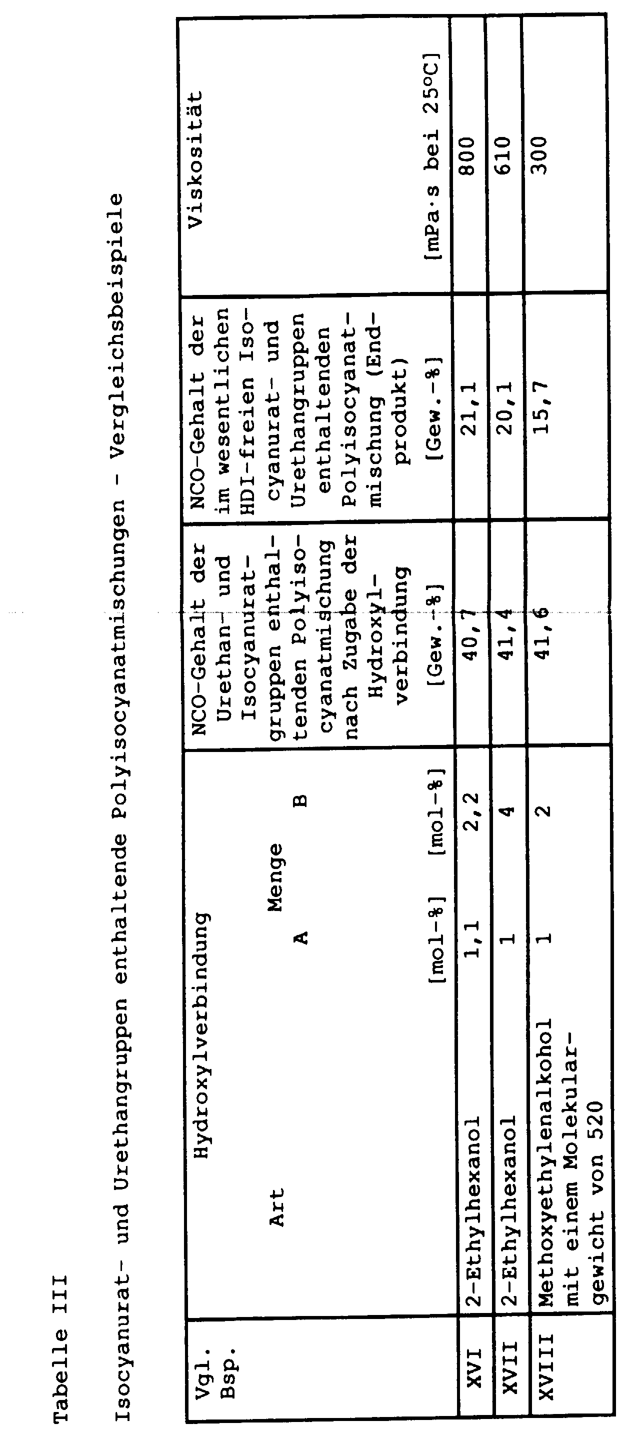

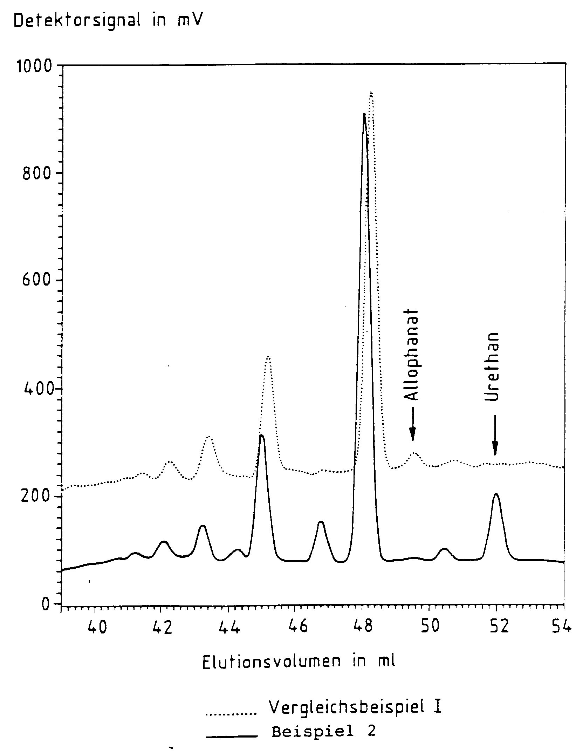

## Patentansprüche

1. Verfahren zur Herstellung von Isocyanurat- und Urethangruppen enthaltenden Polyisocyanatmischungen durch partielle Cyclisierung von organischen Diisocyanaten in Gegenwart von Trimerisierungskatalysatoren, Desaktivierung der Trimerisierungskatalysatoren nach beendeter Cyclisierung und anschließende Umsetzung der erhaltenen Isocyanuratgruppen enthaltenden Polyisocyanatmischungen mit Hydroxylverbindungen, dadurch gekennzeichnet, daß man die partiell trimerisierten Isocyanuratgruppen enthaltenden Polyisocyanatmischungen mit 0,5 bis 10 Mol-% mindestens einer Hydroxylverbindung aus der Gruppe der aliphatischen Alkohole, cycloaliphatischen Alkohole und Polyoxyalkylenalkohole umsetzt und danach die monomeren Diisocyanate abtrennt.

2. Verfahren nach Anspruch 1, dadurch gekennzeichnet, daß die organischen Diisocyanate ausgewählt sind aus der Gruppe der aliphatischen, cycloaliphatischen und araliphatischen Diisocyanate.

3. Verfahren nach Anspruch 1, dadurch gekennzeichnet, daß das organische Diisocyanat 1,6-Hexamethylen-diisocyanat ist.

4. Verfahren nach Anspruch 1, dadurch gekennzeichnet, daß die aliphatischen Alkohole 1 bis 9 Kohlenstoffatome und die cycloaliphatischen Alkohole 6 bis 9 Kohlenstoffatome besitzen.

5. Verfahren nach Anspruch 1, dadurch gekennzeichnet, daß die aliphatischen Alkohole verzweigt sind und 3 bis 9 Kohlenstoffatome besitzen.

6. Verfahren nach Anspruch 1, dadurch gekennzeichnet, daß der aliphatische Alkohol 2-Ethylhexanol ist.

7. Verfahren nach Anspruch 1, dadurch gekennzeichnet, daß die Polyoxyalkylenalkohole ein Molekulargewicht bis 2000 aufweisen und ausgewählt sind aus der Gruppe der Polyoxyethylen-, Polyoxypropylen- und Polyoxypropylen-polyoxyethylenalkohole

8. Verfahren nach Anspruch 1, dadurch gekennzeichnet, daß man als Trimerisierungskatalysator 2-Hydroxypropyl-trimethylammonium-2-ethylhexanoat verwendet.

9. Verfahren nach Anspruch 1, dadurch gekennzeichnet, daß die partiell trimerisierten Isocyanuratgruppen enthaltenden Polyisocyanatmischungen einen NCO-Gehalt von 35 bis 48 Gew.-% besitzen.

10. Verfahren nach Anspruch 1, dadurch gekennzeichnet, daß die im wesentlichen Diisocyanat-freien Isocyanurat- und Urethangruppen enthaltenden Polyisocyanatmischungen einen NCO-Gehalt von 10 bis 23 Gew.-% besitzen.

## Claims

1. A process for the preparation of isocyanurate and urethane group-containing polyisocyanate mixtures by partially cyclizing organic diisocyanates in the presence of trimerization catalysts, deactiving the trimerization catalysts when the cyclization is complete, and subsequently reacting the resultant isocyanurate group-containing polyisocyanate mixtures with hydroxyl compounds, which comprises reacting the partially trimerized isocyanurate group-containing polyisocyanate mixtures with from 0.5 to 10 mol % of at least one hydroxyl compound from the group consisting of aliphatic alcohols, cycloaliphatic alcohols and polyoxyalkylene alcohols, and then separating off the monomeric diisocyanates.

2. A process as claimed in claim 1, wherein the organic diisocyanates are selected from the group consisting of aliphatic, cycloaliphatic and araliphatic diisocyanates.

3. A process as claimed in claim 1, wherein the organic diisocyanate is 1,6-hexamethylene diisocyanate.

4. A process as claimed in claim 1, wherein the aliphatic alcohols have 1 to 9 carbon atoms and the cycloaliphatic alcohols have 6 to 9 carbon atoms.

5. A process as claimed in claim 1, wherein the aliphatic alcohols are branched and have 3 to 9 carbon atoms.

6. A process as claimed in claim 1, wherein the aliphatic alcohol is 2-ethylhexanol.

7. A process as claimed in claim 1, wherein the polyoxyalkylene alcohols have a molecular weight of up to 2000 and are selected from the group consisting of polyoxyethylene alcohols, polyoxypropylene alcohols and polyoxypropylene-polyoxyethylene alcohols.

8. A process as claimed in claim 1, wherein the trimerization catalyst used is 2-hydroxypropyltrimethylammonium 2-ethylhexanoate.

9. A process as claimed in claim 1, wherein the partially trimerized isocyanurate group-containing polyisocyanate mixtures have an NCO content of from 35 to 48% by weight.

10. A process as claimed in claim 1, wherein the essentially diisocyanate-free, isocyanurate and urethane group-containing polyisocyanate mixtures have an NCO content of from 10 to 23% by weight.

## Revendications

1. Procédé de préparation de mélanges de polyisocyanates contenant des radicaux isocyanurate et uréthanne, par la cyclisation partielle de diisocyanates organiques, en présence de catalyseurs de trimérisation, la désactivation des catalyseurs de trimérisation après cyclisation achevée et la réaction subséquente des mélanges de polyisocyanates contenant des radicaux isocyanurate, avec des composés hydroxylés, caractérisé en ce que l'on fait réagir les mélanges de polyisocyanates contenant des radicaux isocyanurate partiellement trimérisés avec de 0,5 à 10% molaires d'au moins un composé hydroxylé, appartenant au groupe des alcools aliphatiques, des alcools cycloaliphatiques et des polyoxyalkylènealcools et on sépare ensuite les diisocyanates monomériques.

2. Procédé suivant la revendication 1, caractérisé en ce que l'on choisit les diisocyanates organiques dans le groupe formé par les diisocyanates aliphatiques, cycloaliphatiques et araliphatiques.

3. Procédé suivant la revendication 1, caractérisé en ce que le diisocyanate organique est le diisocyanate de 1,6-hexaméthylène.

4. Procédé suivant la revendication 1, caractérisé en ce que les alcools aliphatiques comportent de 1 à 9 atomes de carbone et les alcools cycloaliphatiques comportent de 6 à 9 atomes de carbone.

5. Procédé suivant la revendication 1, caractérisé en ce que les alcools aliphatiques sont ramifiés et comportent de 3 à 9 atomes de carbone.

6. Procédé suivant la revendication 1, caractérisé en ce que l'alcool aliphatique est le 2-éthylhexanol.

7. Procédé suivant la revendication 1, caractérisé en ce que les polyoxyalkylènealcools présentent un poids moléculaire allant jusqu'à 2000 et sont choisis dans le groupe formé par les polyoxyéthylène-, polyoxypropylène- et polyoxypropylène-polyoxyéthylènealcools.

8. Procédé suivant la revendication 1, caractérisé en ce que l'on utilise le 2-éthylhexanoate de 2-hydroxypropyl-triméthylammonium, à titre de catalyseur de trimérisation.

9. Procédé suivant la revendication 1, caractérisé en ce que les mélanges de polyisocyanates contenant des radicaux isocyanurate partiellement trimérisés possèdent une teneur en NCO qui varie de 35 à 48% en poids.

10. Procédé suivant la revendication 1, caractérisé en ce que les mélanges de polyisocyanates contenant des radicaux isocyanurate et uréthanne sensiblement dépourvus de diisocyanate possèdent une teneur en NCO qui fluctue de 10 à 23% en poids.
